# EUROPÄISCHE PATENTSCHRIFT

(11) **EP 1 298 880 B1**
(45) Veröffentlichungstag und Bekanntmachung des Hinweises auf die Patenterteilung: **30.11.2005**
(21) Anmeldenummer: 02102318.9
(22) Anmeldetag: 06.09.2002
(51) Int. Cl.: H04L 29/06, H04L 12/56

(54) **Verfahren zur Übermittlung komprimierter Daten in paketvermittelnden Netzwerken**
Method for transmission of compressed data in packet-switched networks
Procédé de transmission des données comprimées dans les réseaux en mode paquet

(30) Priorität: 27.09.2001 DE 10147773
(43) Veröffentlichungstag der Anmeldung: 02.04.2003
(73) Patentinhaber: SIEMENS AKTIENGESELLSCHAFT, 80333 München (DE)
(72) Erfinder: Oost, Johan, 8820, Torhut (BE)

(56) Entgegenhaltungen:
- SHACHAM, MONSOUR, PEREIRA, THOMAS: "RFC 2393: IP Payload Compression Protocol (IPComp)" REQUEST FOR COMMENTS, - Dezember 1998 (1998-12) XP002269789

## Beschreibung

Die Erfindung betrifft ein Verfahren und eine Anordnung zur Übermittlung komprimierter Daten in paketorientierten Netzwerken.

Der stetig anwachsende Informationsaustausch stellt hohe Anforderungen an Infrastrukturen zur Übertragung dieser Informationen. Angesichts der derzeitigen Entwicklung ist zur Vermeidung von Engpässen bei der Informationsübertragung ein stetiger Ausbau von informationsübertragenden, paketorientierten Netzwerken geboten.

Eine weitere Möglichkeit zur Vermeidung von Engpässen ist die Komprimierung von über paketorientierten Netzwerke zu sendenden Daten. In der Literatur sind zahlreiche Verfahren bekannt, die das Ziel haben, Informationen in ihrem Umfang zu reduzieren, und damit einen schnelleren Datendurchsatz bei geringerem Speicherbedarf zu erreichen. Das Prinzip dieser Datenkomprimierung beruht auf der Eliminierung redundanter Zeichen bzw. einer dynamischen Zuordnung von Datenbits in Abhängigkeit oder Häufigkeit eines Zeichens.

Das in paketorientierten Netzwerken häufig verwendete Protokoll HTTP (Hypertext Transfer Protocol) dient einem Informationsaustausch zwischen einem Leitrechner (Server) und einem Client-Anwendung, wie etwa einem Browser. Das HTTP-Protokoll Version 1.1 ist in vielen derzeit gängigen Browsern implementiert und unterstützt eine Datenkompression nach dem "GZIP"-Verfahren, das in dem Dokument Deutsch, P. et. al., RFC1952 (Request for Comment): "GZIP File Format Specification", Version 4.3, Mai 1996 beschrieben ist. Das HTML 1.1-Protokoll ist spezifiziert in dem Dokument Fielding, R. et. al., RFC2068:"Hypertext Transfer Protocol - HTTP/1.1", Januar 1997.

Ein weiteres Kompressionsprotokoll ist in einem Arbeitspapier "Request for Comment" der Network Working Group, RFC 2393 der Autorengruppe Shacham, A. et al. offenbart. Es handelt sich dabei um das IP Payload Compression Protocol, kurz IPComp. Dieses Protokoll zeichnet sich durch die Kompression jedes Datenpakets aus, wobei zwischen zwei Endpunkten zunächst eine Verhandlungsphase erfolgt, in der Parameter wie ein verwendeter Kompressionsalgorithmus, ein Verarbeitungsmodus, ein Kompressionsparameterindex usw. ausgetauscht werden.

Wenngleich diese Datenkompression - z.B. gemäß des HTTP 1.1-Protokolls - eine erhebliche Reduktion der Datenmenge ohne Verlust an Information nach einer erfolgreichen Dekompression an ihrem jeweilig entgegengesetzten Kommunikationsendpunkt gewährleistet, ist die Anwendung einer derartigen Datenkompression auf die Fälle beschränkt, in denen beide Kommunikationsendpunkte über die für das jeweilige Datenkompressionsverfahren spezifischen Kodierungs- bzw. Dekodierungsalgorithmen verfügen.

Aufgabe der Erfindung ist es, ein Verfahren anzugeben, das eine flexiblere Verwendung einer Datenkompression bei der Übertragung von Information über ein paketorientiertes Netzwerk ermöglicht.

Eine Lösung der Aufgabe erfolgt durch die Merkmale des Patentanspruchs 1 bzw. 9.

Erfindungsgemäß wird an Netzknoteneinrichtungen - beispielsweise Routern oder auch einem Kommunikationsendpunkt selbst - vor der Weitergabe eines Datenpakets an eine weitere Netzknoteneinrichtung eine Überprüfung des Kompressionszustandes der in den Datenpaketen übermittelten Daten durchgeführt und ein an die weiterzugebende Netzknoteneinrichtung charakterisierender Eintrag in einer Datenbank ausgewertet. In Abhängigkeit des charakterisierenden Eintrags und des Vorliegens des Kompressionszustandes wird ein Nachrichtenkopfeintrag - in der Fachwelt oftmals als Header bezeichnet - des Datenpakets modifiziert.

Ein wesentlicher Vorteil des erfindungsgemäßen Verfahrens ist darin zu sehen, dass durch eine Modifizierung des Nachrichtenkopfeintrages sowie der Berücksichtigung eines die folgende Netzknoteneinrichtung charakterisierenden Datenbankeintrags eine Identifizierung und Leitwegführung von komprimierten Datenpaketen unter Verwendung von Ressourcen der Netzknoteneinrichtungen möglich ist, statt diese erst an den Kommunikationsendpunkten durchzuführen.

Vorteilhafte Weiterbildungen der Erfindung sind in den Unteransprüchen angegeben.

In vorteilhafter Weise wird ein unkomprimiertes Datenpaket an der Netzknoteneinrichtung komprimiert.

Es wird eine z.B. nach dem TCP-Protokoll (Transfer Control Protocol) definierte Portnummer zur Charakterisierung des Kompressionszustandes verwendet.

Besonders vorteilhaft ist eine Zuordnung einer eigenen Portnummer im Nachrichtenkopf komprimierter Datenpakete. Diese zu einer typischen Portnummer korrespondierende Portnummer dient der Information, dass das jeweilige Datenpaket komprimierte Daten enthält, ohne die Struktur des Nachrichtenkopfes für die Aufnahme dieser Information ändern zu müssen.

Ein Ausführungsbeispiel der Erfindung wird im folgenden anhand der Zeichnung näher erläutert.

Dabei zeigen:
- Fig. 1:: ein Strukturbild zur schematischen Darstellung von paketorientierten Verbindungswegen zwischen zwei erfindungsgemäß ausgestalteten Netzknoteneinrichtungen; und
- Fig. 2:: ein Strukturbild zur schematischen Darstellung eines Verbindungsweges zweier erfindungsgemäß ausgestalteten Netzknoteneinrichtungen mit einer weiteren Netzknoteneinrichtung.

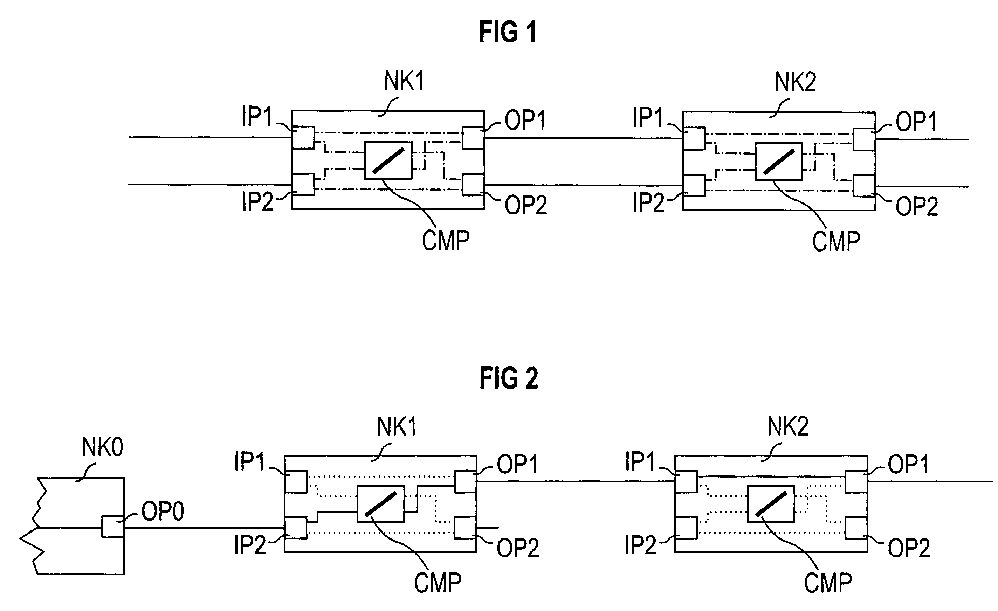

In Fig. 1 sind zwei identisch ausgestaltete Netzknoteneinrichtungen NK1,NK2 dargestellt. Es handelt sich dabei um Router, die mehrere - nicht dargestellte - paketorientierte Netzwerke oder auch - nicht dargestellte - sogenannte Subnetze innerhalb eines paketorientierten Netzwerkes auf der Schicht 3 (Vermittlungsschicht) des OSI-Referenzmodells (Open Systems Interconnection) der Internationalen Standardisierungs-Organisation ISO (International Standardization Organization) miteinander verbinden. Zusätzlich zu - nicht dargestellten - Funktionseinheiten herkömmlicher Router weisen die Netzknoteneinrichtungen NK1, NK2 eine Komprimierungs-/Dekomprimierungseinheit CMP auf.

Des weiteren weisen beide Netzknoteneinrichtungen NK1,NK2 jeweils zwei logische Eingänge IP1,IP2 und zwei logische Ausgänge OP1,OP2 auf. Zwischen den beiden Eingängen IP1,IP2, den beiden Ausgängen OP1,OP2 sind bildhaft netzknoteneinrichtungs-interne mögliche Verarbeitungswege von Daten strichpunktiert dargestellt. Verbindungswege zwischen den Netzknoteneinrichtung NK1,NK2 sind als Linien dargestellt.

Am Eingang IP1 eintreffende unkomprimierte Daten werden entweder direkt an den Ausgang OP1 weitergeleitet oder durch die Komprimierungs-/Dekomprimierungseinheit CMP komprimiert und an den Ausgang OP2 weitergeleitet. Am Eingang IP2 eintreffende komprimierte Daten werden entweder direkt an den Ausgang OP2 weitergeleitet oder durch die Komprimierungs-/Dekomprimierungseinheit CMP dekomprimiert und an den Ausgang OP1 weitergeleitet.

Der Ausgang OP1 der ersten Netzknoteneinrichtung NK1 ist mit dem Eingang IP1 der zweiten Netzknoteneinrichtung NK2 verbunden, der Ausgang OP2 der ersten Netzknoteneinrichtung NK1 ist mit dem Eingang IP2 der zweiten Netzknoteneinrichtung NK2 verbunden.

In paketorientierten Netzwerken existieren keine festen Verbindungswege. Die in der Zeichnung strichpunktiert sowie durchgezogen dargestellten Linien sind demgemäß als bildliche Darstellung möglicher Verbindungswege in einem - verbindungslosen - paketorientierten Netzwerk zu verstehen. Außerdem stellt die zweite Netzknoteneinrichtung NK2 nur einen möglichen Verbindungspartner der ersten Netzknoteneinrichtung NK1 dar.

Information werden in einem paketorientierten Netzwerk über einzelne Datenpakete übertragen, die jeweils einen charakterisierenden Nachrichtenkopfeintrag - in der Fachwelt oftmals als Header bezeichnet - und ein die eigentliche Information enthaltendes Datensegment enthalten. Der Nachrichtenkopfeintrag enthält dabei Information über einen Kommunikationsendpunkt, also beispielsweise eine logische Zieladresse des Datenpakets.

Die Ein- bzw. Ausgänge IP1,IP2;OP1,OP2 sind demzufolge nicht als Funktionseinheiten zu verstehen, sondern dienen einer strukturierten bildlichen Darstellung von logischen Kommunikationsendpunkten eines Datenpakets. Da eine Kommunikation in einem paketorientierten Netzwerk bidirektional erfolgt, sind die Termini Ein- bzw. Ausgänge nicht als einschränkende Richtungsangaben zu verstehen, sondern dienen einer bildhaften Darstellung einer Verarbeitungsweise von Datenpaketen.

Die Übertragung von Datenpaketen zu ihrem Kommunikationsendpunkt erfolgt innerhalb eines paketorientierten Netzwerks über mehrere Zwischenstationen, wobei jede Zwischenstation Informationen über die jeweils mit ihr verbundenen weiteren Zwischenstationen enthält. In Form von Routingtabellen ist dabei durch eine Steuerungseinrichtung eine Wahl der nächsten Zwischenstation anhand von Kriterien wie beispielsweise QoS (Quality of Service), einer zu erwartenden Datenübertragungsrate usw. für die jeweilige Zwischenstation verfügbar. Die Steuerungseinrichtung stellt dabei die nächste Zwischenstation über einen Eintrag einer entsprechenden Adresse im Nachrichtenkopfeintrag ein. Die beiden Netzknoteneinrichtungen NK1,NK2 verfügen jeweils über eine derartige - nicht dargestellte - Routingtabelle und eine - nicht dargestellte - Steuerungseinrichtung zur Einstellung der nächsten Zwischenstation.

Ein Beispiel eines logischen Kommunikationsendpunkt ist eine in der Fachwelt oftmals als "Socket" bezeichnete Hardware- und/oder Software-Struktur. Der Bezug auf ein Socket erfolgt durch eine Netzwerknummer, eine Rechnernummer und eine PortNummer. Sockets sind die Basis für Implementierungen eines paketorientierten Netzwerks nach einer dem Fachmann als TCP/IP-Standard (Transfer Control Protocol/Internet Protocol) bekannten Spezifikation. Alternativ zu dem TCP-Protokoll ist auch die Verwendung von UDP (User Datagram Protocol) oder anderen Transportprotokollen möglich.

Der Nachrichtenkopfeintrag eines Datenpakets enthält einen die Portnummer charakterisierenden Eintrag. Eine Vergabe der Portnummern dient der Identifikation von verschiedenen Datenströmen, die im TCP-Protokoll gleichzeitig verarbeitet werden. Über diese Portnummern erfolgt ein Datenaustausch zwischen im paketorientierten Netzwerk verteilten Anwendungsprozessen. Die Vergabe dieser Portnummern an Anwendungsprozesse geschieht dynamisch und wahlfrei. Für bestimmte, häufig benutzte Anwendungsprozesse sind jedoch durch die IANA (Internet Assigned Numbers Authority) feste Portnummern vergeben, die in der Fachwelt oftmals als typische Portnummern oder auch als "Assigned Numbers" bzw. "Well Known Numbers" bezeichnet werden.

Somit sind die bildlichen Ein- bzw. Ausgänge IPl,IP2;OP1,OP2 der Netzknoteneinrichtung NK1,NK2 als logischen Portnummern zugeordneten Kommunikationsendpunkten von Datenpaketen zu verstehen. Einem ersten Ein-Ausgangspaar IP1,OP1 ist dabei eine - bezüglich eines Anwendungsprozesses - typische Portnummer, einem zweiten Ein-Ausgangspaar IP2,OP2 eine korrespondierende Portnummer zugeordnet.

Nach diesen einleitenden Darstellungen wird im folgenden das erfindungsgemäße Verfahren zur Übermittlung komprimierter Daten in paketorientierten Netzwerken detaillierter beschrieben.

Zum Zwecke einfacherer Darstellung wird im folgenden lediglich ein Anwendungsprozess auf Basis des WWW/HTTP-Protokolls (World Wide Web/Hypertext Transfer Protocol) erläutert, dem die typische Portnummer "80" zugeordnet ist. Als korrespondierende Portnummer dieses Anwendungsprozesses sei die durch die IANA nicht zugeordnete und demgemäß für eine Definition zur Verfügung stehende Portnummer "60" definiert.

Anderen Dienste bzw. Anwendungsprozesse wie beispielsweise SMTP (Simple Mail Transfer Protocol), FTP (File Transfer Protocol) usw. ist in den Netzknoteneinrichtungen NK1,NK2 jeweils deren typische Portnummer und eine korrespondierende Portnummer zugeordnet, in der Zeichnung und in der Beschreibung wird aus Platzgründen von deren Darstellung jedoch abgesehen, das erfindungsgemäße Verfahren kann analog zum hier beschriebenen Ausführungsbeispiel auch bei diesen Diensten bzw. Anwendungsprozessen durchgeführt werden.

Der mit der Portnummer "80" des Anwendungsprozesses HTTP korrespondierende Port mit der Portnummer "60" wird definiert als "komprimiertes HTTP" und im folgenden abkürzend mit CHTTP bezeichnet ("Compressed HTTP"). Das erste Ein-Ausgangspaar IP1,OP1 der ersten bzw. zweiten Netzknoteneinrichtung NK1,NK2 ist dem Empfang bzw. der Weitergabe von Datenpaketen zugeordnet, die durch ihre im Nachrichtenkopf lokalisierte Angabe der Portnummer "80" dem Anwendungsprozess HTTP zugeordnet sind. Das zweite Ein-Ausgangspaar IP2,OP2 der ersten bzw. zweiten Netzknoteneinrichtung NK1,NK2 ist dem Empfang bzw. der Weitergabe von Datenpaketen zugeordnet, die durch ihre im Nachrichtenkopf lokalisierte Angabe der Portnummer "60" dem Anwendungsprozess HTTP zugeordnet sind, im Unterschied zu Datenpaketen mit der Portnummer "80" jedoch komprimierte Daten (CHTTP) nach dem HTTP-Protokoll in ihrem Datensegment enthalten.

Der Eingang IP1 beider Netzknoteneinrichtungen NK1,NK2 steht bildhaft für Datenpakete, die mit der Portnummer "80" im Nachrichtenkopfeintrag an der jeweiligen Netzknoteneinrichtung NK1,NK2 eintreffen und in ihrem Datensegment unkomprimierte Daten nach dem HTTP-Protokoll enthalten.

Der Eingang IP2 beider Netzknoteneinrichtungen NK1,NK2 steht bildhaft für Datenpakete, die mit der Portnummer "60" im Nachrichtenkopfeintrag an der jeweiligen Netzknoteneinrichtung NK1,NK2 eintreffen und in ihrem Datensegment komprimierte Daten nach dem CHTTP-Protokoll enthalten.

Der Ausgang OP1 beider Netzknoteneinrichtungen NK1,NK2 steht bildhaft für Datenpakete, die mit der Portnummer "80" im Nachrichtenkopfeintrag von der jeweiligen Netzknoteneinrichtung NK1,NK2 an die nächste Zwischenstation weitergegeben werden und in ihrem Datensegment unkomprimierte Daten nach dem HTTP-Protokoll enthalten.

Der Ausgang OP2 beider Netzknoteneinrichtungen NK1,NK2 steht bildhaft für Datenpakete, die mit der Portnummer "60" im Nachrichtenkopfeintrag von der jeweiligen Netzknoteneinrichtung NK1,NK2 an die nächste Zwischenstation weitergegeben werden und in ihrem Datensegment komprimierte Daten nach dem CHTTP-Protokoll enthalten.

Für die erste Netzknoteneinrichtung NK1 ist die erfindungsgemäß ausgestaltete Netzknoteneinrichtung NK2 als nächste Zwischenstation wählbar. Das heißt, sie besitzt ebenfalls einen CHTTP-Port und kann über die Komprimierungs-/Dekomprimierungseinheit CMP unkomprimiert empfangene Daten komprimieren bzw. komprimiert empfangen Daten dekomprimieren. Diese Ausgestaltung der zweiten Netzknoteneinrichtung NK2 ist über einen entsprechenden Eintrag in der Routingtabelle der ersten Netzknoteneinrichtung NK1 bekannt.

Im folgenden wird eine Verarbeitung von Datenpaketen erläutert.

Fig. 2 zeigt die bekannte Anordnung der ersten und zweiten Netzknoteneinrichtung NK1,NK2. Die in Fig. 1 strichpunktiert dargestellten möglichen Verarbeitungswege der Daten innerhalb der Netzknoteneinrichtungen NK1,NK2 sind jetzt punktiert bzw. durchgezogen dargestellt, wobei die durchgezogene Linie den tatsächlichen Verarbeitungsweg der - punktiert dargestellten - möglichen Verarbeitungswege darstellt. Wie in Fig.1 stellt eine durchgezogene Linie außerdem den Weg von Datenpaketen durch das paketorientierte Netzwerk dar.

Eine weitere Netzknoteneinrichtung NK0 kommuniziert im Zuge eines Austauschs von Datenpaketen mit der ersten Netzknoteneinrichtung NK1. Diese weitere Netzknoteneinrichtung NK0 kann ein Router sein, oder auch - wie im folgenden angenommen - ein Kommunikationsendpunkt NK0. Der Kommunikationsendpunkt NK0 unterstützt kein CHTTP-Protokoll und übermittelt unkomprimierte Datenpakete mit der Portnummer "80" an die erste Netzknoteneinrichtung NK1. Datenpakete mit der Portnummer "80" werden an der ersten Netzknoteneinrichtung NK1 an deren zweiten Eingang IP2 empfangen. Unter Verwendung von Routingtabellen wird für die Weiterleitung dieser Datenpakete die zweite Netznoteneinrichtung NK2 ausgewählt, die entsprechend einem Eintrag in der Routingtabelle einen CHTTP-Port besitzt und über die Komprimierungs-/Dekomprimierungseinheit CMP unkomprimiert empfangene Daten komprimieren bzw. komprimiert empfangen Daten dekomprimieren kann. Daraufhin werden die Datenpakete innerhalb der ersten Netzknoteneinrichtung NK1 der Komprimierungs-/Dekomprimierungseinheit CMP zugeführt.

Die Zuführung der Daten zu der Komprimierungs-/Dekomprimierungseinheit CMP wird von einer - nicht dargestellten - Steuerlogik entschieden. Falls Systemressourcen der ersten Netzknoteneinrichtung NK1 z.B. aufgrund von Auslastungen eines - nicht dargestellten - Prozessors oder eines - nicht dargestellten - Arbeitsspeicher für die rechenaufwändige Kompression nicht ausreichen, wird durch die Steuerlogik eine unkomprimierte Weitergabe an die nächste Netzknoteneinrichtung NK2 veranlasst.

Eine Kompression der Datenpakete durch die Komprimierungs-/Dekomprimierungseinheit CMP erfolgt unter Einbezugnahme von aus den Datensegmenten mehrerer Datenpakete entnommen Daten. Diese Kompression wird nach gängigen Kompressionstechniken mit einer anschließenden Defragmentierung der Daten und Paketierung auf Datenpakete abgeschlossen.

Die Portnummer im Nachrichtenkopfeintrag wird auf die zum HTTP-Protokoll korrespondierenden Portnummer für CHTTP-Daten "60" eingestellt. Die Einträge im Nachrichtenkopfeintrag bezüglich der Netzwerknummer und der Rechnernummer bleiben jedoch gleich. Die komprimierten Datenpakete werden von der Komprimierungs-/Dekomprimierungseinheit CMP an den ersten Ausgang OP1 der Netzknoteneinrichtung NK1 weitergeleitet.

An der zweiten Netzknoteneinrichtung NK2 werden diese Datenpakete durch die korrespondierende Portnummer "60" als CHTTP-Daten erkannt und am Eingang IP1 entgegengenommen. Wird durch einen Eintrag in der Routingtabelle der zweiten Netzknoteneinrichtung NK2 angezeigt, dass die der zweiten Netzknoteneinrichtung NK2 folgende - nicht dargestellte - Netzknoteinrichtung oder auch der der zweiten Netzknoteneinrichtung NK2 folgende - nicht dargestellte - Kommunikationsendpunkt seinerseits einen CHTTP-Port besitzt und über die Komprimierungs-/Dekomprimierungseinheit CMP unkomprimiert empfangene Daten komprimieren bzw. komprimiert empfangen Daten dekomprimieren kann, werden die Datenpakete in komprimierten Zustand und mit Beibehaltung der Portnummer "60" weitergegeben. In der Zeichnung wird dieser Fall durch die durchgezogene Linie am erste Ausgang OP1 bzw. zwischen dem ersten Eingang IP1 und dem ersten Ausgang OP1 dargestellt.

Für den Fall, dass die der zweiten Netzknoteneinrichtung NK2 - nicht dargestellten - folgende Netzknoteneinrichtung oder der der zweiten Netzknoteneinrichtung NK2 - nicht dargestellte - folgende Kommunikationsendpunkt gemäß eines Eintrags in der Routingtabelle keinen CHTTP-Port besitzt, werden die komprimierten Datenpakete statt dessen der Komprimierungs /Dekomprimierungseinheit CMP zugeführt und die Portnummer in den Nachrichtenkopfeinträgen der dekomprimierten Datenpakete auf den dem HTTP-Protokoll zugeordneten Wert "80" eingestellt.

## Patentansprüche

1. Verfahren zur Übermittlung komprimierter Daten in paketorientierten Netzwerken, mit einer ersten Netzknoteneinrichtung (NK1) und einer zweiten Netzknoteneinrichtung (NK2) wobei die Netzknoteneinrichtungen (NK1, NK2) logische Ports verwalten, die einer Bestimmung der Zugehörigkeit verschiedener aus zusammengehörigen Datenpaketen bestehender Datenströme dienen und über eine Portnummer identifiziert werden, wobei vor einer Weitergabe von Datenpaketen von der ersten an die zweite Netzknoteneinrichtung (NK1;NK2)
- eine Überprüfung eines Kompressionszustandes der in den Datenpaketen enthaltenen Daten durchgeführt wird;
- ein die zweite Netzknoteneinrichtung (NK2) charakterisierender Eintrag in einer Datenbank ausgewertet wird; und;
- in Abhängigkeit des charakterisierenden Eintrags und des Kompressionszustandes die Portnummer in den Nachrichtenkopfeinträgen der Datenpakete modifiziert wird.

2. Verfahren nach Anspruch 1,
**dadurch gekennzeichnet,**
**dass** im Falle von an der ersten Netzknoteneinrichtung (NK1) unkomprimiert eintreffenden Datenpakete vor der Weitergabe eine Komprimierung dieser Datenpakete vorgenommen wird.

3. Verfahren nach Anspruch 2,
**dadurch gekennzeichnet,**
**dass** die Komprimierung von Datenpaketen nur dann erfolgt, wenn ausreichende Systemressourcen vorhanden sind.

4. Verfahren nach einem der vorhergehenden Ansprüche,
**dadurch gekennzeichnet,**
**dass** für häufig benutzte mit einem Austausch von Datenströmen einhergehende Anwendungsprozesse eine typische Portnummer für den jeweiligen Anwendungsprozess reserviert ist und dass der typischen Portnummer des jeweiligen Anwendungsprozesses eine korrespondierende Portnummer zugeordnet wird, die diesen Anwendungsprozess mit einem Austausch komprimierter Datenströme identifiziert.

5. Verfahren nach Anspruch 4,
**dadurch gekennzeichnet,**
**dass** die korrespondierende Portnummer im Nachrichtenkopfeintrag der Datenpakete beibehalten wird und an der ersten Netzknoteinrichtung (NK1) komprimierte Datenpakete in diesem Kompressionszustand an die zweite Netzknoteneinrichtung (NK2) weitergeleitet werden, wenn der charakterisierende Eintrag der zweiten Netzknoteneinrichtung (NK2) eine Unterstützung von korrespondierenden Portnummern anzeigt.

6. Verfahren nach Anspruch 4,
**dadurch gekennzeichnet,**
**dass** die typische Portnummer im Nachrichtenkopfeintrags der Datenpakete in die korrespondierende Portnummer geändert wird und an der ersten Netzknoteinrichtung (NK1) empfangene unkomprimierte Datenpakete vor der Weiterleitung an die zweite Netzknoteneinrichtung (NK2) komprimiert werden, wenn der charakterisierende Eintrag der zweiten Netzknoteneinrichtung (NK2) eine Unterstützung von korrespondierenden Portnummern anzeigt.

7. Verfahren nach Anspruch 4,
**dadurch gekennzeichnet,**
**dass** die korrespondierende Portnummer der Datenpakete in die typische Portnummer des Anwendungsprozesses geändert wird und an der ersten Netzknoteinrichtung (NK1) empfangene komprimierte Datenpakete dekomprimiert werden, wenn der charakterisierende Eintrag der zweiten Netzknoteneinrichtung (NK2) keine Unterstützung von korrespondierenden Portnummern anzeigt.

8. Verfahren nach Anspruch 4,
**dadurch gekennzeichnet,**
**dass** die typische Portnummer des Datenpakets beibehalten wird und an der ersten Netzknoteinrichtung (NK1) unkomprimiert empfangene Datenpakete in diesem Kompressionszustand an die zweite Netzknoteneinrichtung (NK2) weitergeleitet werden, wenn der charakterisierende Eintrag der zweiten Netzknoteneinrichtung (NK2) keine Unterstützung von korrespondierenden Portnummern anzeigt.

9. Netzknoteneinrichtung zur Übermittlung komprimierter Daten in paketorientierten Netzwerken, mit Mitteln zur Verwaltung logischer Ports, die einer Bestimmung der Zugehörigkeit verschiedener aus zusammengehörigen Datenpaketen bestehenden Datenströmen dienen und über eine Portnummer identifiziert werden;
- einer Auswerteeinheit zur Überprüfung eines Kompressionszustandes der in den Datenpaketen enthaltenen Daten und zur Auswertung eines eine zweite Netzknoteneinrichtung (NK2) charakterisierenden Eintrags in einer Datenbank, wobei diese Überprüfung vor einer Weitergabe der Datenpakete an die zweite Netzwerkknoteneinrichtung stattfindet; und;
- einer Komprimierungs-/Dekomprimierungseinheit (CMP) zur Modifizierung einer in Nachrichtenkopfeinträgen der Datenpakete enthaltenen Portnummer in Abhängigkeit des charakterisierenden Eintrags und des Kompressionszustandes.

10. Netzknoteneinrichtung nach Anspruch 9,
**dadurch gekennzeichnet,**
**dass** die Komprimierungs-/Dekomprimierungseinheit (CMP) im Falle von an der ersten Netzknoteneinrichtung (NK1) unkomprimiert eintreffenden Datenpakete vor der Weitergabe eine Komprimierung dieser Datenpakete vornimmt.

11. Netzknoteneinrichtung nach einem der Ansprüche 9 bis 10,
**dadurch gekennzeichnet,**
**dass** die Netzknoteneinrichtung (NK1) als Router ausgestaltet ist.

12. Netzknoteneinrichtung nach einem der Ansprüche 9 bis 10,
**dadurch gekennzeichnet,**
**dass** die Netzknoteneinrichtung (NK1) als Bridge ausgestaltet ist.

## Claims

1. Method for transmitting compressed data in packet-oriented networks having a first network node device (NK1) the network node devices (NK1, NK2) managing logical ports which are used for determining where various data streams comprising associated data packets belong and which are identified by means of a port number and a second network node device (NK2), where, before data packets are forwarded from the first to the second network node device (NK1; NK2),
- a compression state for the data contained in the data packets is checked;
- a database entry characterizing the second network node device (NK2) is evaluated; and
- the port number in the message header entries in the data packets is modified on the basis of the characterizing entry and on the basis of the compression state.

2. Method according to Claim 1,
**characterized in that**, in the event of data packets arriving at the first network node device (NK1) in uncompressed form, these data packets are compressed before they are forwarded.

3. Method according to Claim 2,
**characterized**
**in that** data packets are compressed only if there are sufficient system resources available.

4. Method according to one of the preceding claims,
**characterized**
**in that**, for frequently used application processes associated with an interchange of data streams, a typical port number is reserved for the respective application process and in that the typical port number for the respective application process is assigned a corresponding port number which identifies this application process with an interchange of compressed data streams.

5. Method according to Claim 4,
**characterized**
**in that** the corresponding port number in the message header entry in the data packets is retained and data packets compressed on the first network node device (NK1) are forwarded in this compression state to the second network node device (NK2) if the characterizing entry for the second network node device (NK2) indicates that corresponding port numbers are supported.

6. Method according to Claim 4,
**characterized**
**in that** the typical port number in the message header entry in the data packets is changed to the corresponding port number, and uncompressed data packets received on the first network node device (NK1) are compressed before they are forwarded to the second network node device (NK2) if the characterizing entry for the second network node device (NK2) indicates that corresponding port numbers are supported.

7. Method according to Claim 4,
**characterized**
**in that** the corresponding port number in the data packets is changed to the typical port number for the application process, and compressed data packets received on the first network node device (NK1) are decompressed if the characterizing entry for the second network node device (NK2) indicates that corresponding port numbers are not supported.

8. Method according to Claim 4,
**characterized**
**in that** the typical port number in the data packet is retained and data packets received on the first network node device (NK1) in uncompressed form are forwarded in this compression state to the second network node device (NK2) if the characterizing entry for the second network node device (NK2) indicates that corresponding port numbers are not supported.

9. Network node device for transmitting compressed data in packet-oriented networks, having means for managing logical ports which are used for determining where various data streams comprising associated data packets belong and which are identified by means of a port number
- an evaluation unit for checking a compression state for the data contained in the data packets and for evaluating a database entry characterizing a second network node device (NK2), this checking taking place before the data packets are forwarded to the second network node device; and
- a compression/decompression unit (CMP) for modifying a port number contained in message header entries in the data packets on the basis of the characterizing entry and on the basis of the compression state.

10. Network node device according to Claim 9,
**characterized**
**in that**, in the event of data packets arriving at the first network node device (NK1) in uncompressed form, the compression/decompression unit (CMP) compresses these data packets before they are forwarded.

11. Network node device according to either of claims 9 and 10,
**characterized**
**in that** the network node device (NK1) is in the form of a router.

12. Network node device according to either of Claims 9 and 10,
**characterized**
**in that** the network node device (NK1) is in the form of a bridge.

## Revendications

1. Procédé pour la transmission de données comprimées dans des réseaux orientés paquets, comprenant un premier appareil de noeud de réseau (NK1) et un second appareil de noeud de réseau (NK2), les appareils de noeuds de réseau (NK1, NK2) gérant des ports logiques, qui servent à une détermination de la correspondance de différents flux de données composés de paquets de données cohérents et sont identifiés au moyen d'un numéro de port, dans lequel, avant une transmission de paquets de données du premier au second appareil de noeud de réseau (NK1 ; NK2) :
- un contrôle d'un état de compression des données contenues dans les paquets de données est effectué ;
- une inscription caractérisant le second appareil de noeuds de réseau (NK2) est analysée dans une banque de données ; et
- le numéro de port dans les en-têtes de message des paquets de données est modifié en fonction de l'inscription caractérisante et de l'état de compression.

2. Procédé selon la revendication 1,
**caractérisé en ce que**
dans le cas de paquets de données arrivant non comprimés sur le premier appareil de noeud de réseau (NK1), une compression de ces paquets de données est effectuée avant la transmission.

3. Procédé selon la revendication 2,
**caractérisé en ce que**
la compression de paquets de données n'intervient que lorsqu'on dispose de ressources de système suffisantes.

4. Procédé selon l'une quelconque des revendications précédentes,
**caractérisé en ce que**
pour des processus d'application souvent utilisés et accompagnant un échange de flux de données, un numéro de port caractéristique est réservé pour le processus d'application concerné et **en ce que** au numéro de port caractéristique du processus d'application concerné est attribué un numéro de port correspondant, qui identifie ce processus d'application avec un échange de flux de données comprimées.

5. Procédé selon la revendication 4,
**caractérisé en ce que**
le numéro de port correspondant est conservé dans l'en-tête de message des paquets de données et des paquets de données comprimés sur le premier appareil de noeud de réseau (NK1) sont transmis dans cet état de compression au second appareil de noeud de réseau (NK2) lorsque l'inscription caractérisante du second appareil de noeud de réseau (NK2) affiche une assistance de numéros de port correspondants.

6. Procédé selon la revendication 4,
**caractérisé en ce que**
le numéro de port caractéristique dans l'en-tête de message des paquets de données est modifié en numéro de port correspondant et des paquets de données non comprimés reçus sur le premier appareil de noeud de réseau (NK1) sont comprimés avant la transmission au second appareil de noeud de réseau (NK2) lorsque l'inscription caractérisante du second appareil de noeud de réseau (NK2) affiche une assistance de numéros de port correspondants.

7. Procédé selon la revendication 4,
**caractérisé en ce que**
le numéro de port correspondant des paquets de données est modifié en numéro de port caractéristique du processus d'application et des paquets de données comprimés et reçus sur le premier appareil de noeud de réseau (NK1) sont décomprimés lorsque l'inscription caractérisante du second appareil de noeud de réseau (NK2) n'affiche pas une assistance de numéros de port correspondants.

8. Procédé selon la revendication 4,
**caractérisé en ce que**
le numéro de port caractéristique du paquet de données est conservé et des paquets de données reçus non comprimés sur le premier appareil de noeud de réseau (NK1) sont transmis dans cet état de compression au second appareil de noeud de réseau (NK2) lorsque l'inscription caractérisante du second appareil de noeud de réseau (NK2) n'affiche pas une assistance de numéros de port correspondants.

9. Appareil de noeud de réseau pour la transmission de données comprimées dans des réseaux orientés paquets, avec des moyens pour la gestion de ports logiques, qui servent à une détermination de la correspondance de différents flux de données composés de paquets de données cohérents et sont identifiés par un numéro de port,
- une unité d'analyse pour le contrôle d'un état de compression des données contenues dans les paquets de données et pour l'analyse d'une inscription caractérisant un second appareil de noeud de réseau (NK2) dans une banque de données, ce contrôle ayant lieu avant une transmission des paquets de données au second appareil de noeud de réseau, et
- une unité de compression/décompression (CMP) pour la modification d'un numéro de port inclus dans des en-têtes de message des paquets de données en fonction de l'inscription caractérisante et de l'état de compression.

10. Appareil de noeud de réseau selon la revendication 9,
**caractérisé en ce que**
l'unité de compression/décompression (CMP) effectue, dans le cas de paquets de données arrivant non comprimés sur le premier appareil de noeud de réseau (NK1), une compression de ces paquets de données avant la transmission.

11. Appareil de noeud de réseau selon l'une quelconque des revendications 9 à 10,
**caractérisé en ce que**
l'appareil de noeud de réseau (NK1) est conçu comme un routeur.

12. Appareil de noeud de réseau selon l'une quelconque des revendications 9 à 10,
**caractérisé en ce que**
l'appareil de noeud de réseau (NK1) est conçu comme bridge.
